# EUROPEAN PATENT APPLICATION

(11) **EP 4 779 387 A1**
(43) Date of publication of application: **22.07.2026**
(21) Application number: 26152148.8
(22) Date of filing: 15.01.2026
(51) Int. Cl.: G02B 21/36, G02B 21/24

(54) **MICROSCOPE SYSTEM, CONTROL DEVICE, AND CONTROL METHOD**

(30) Priority: 17.01.2025 JP 2025006723; 07.01.2026 JP 2026001229
(71) Applicant: Evident Corporation, Kamiina-gun, Nagano 399-0495 (JP)
(72) Inventor: SAKURAI, Ayumu, Nagano, 3990495 (JP); ARIGA, Naohiro, Nagano, 3990495 (JP); YAGI, Yoshihito, Nagano, 3990495 (JP); HATTORI, Toshiyuki, Nagano, 3990495 (JP)
(74) Representative: Gunzelmann, Rainer

(57) **Abstract**

A two-dimensional image pickup device picks up an image of an image pickup target specimen on a stage. The focusing device changes a distance between the objective lens and the stage. A control unit acquires a specific parameter that is used for picking up an image of the image pickup target specimen and selected according to a type of the image pickup target specimen from among a plurality of parameters, each of which is used for picking up an image of each of a plurality of types of specimens. The control unit controls the stage, the two-dimensional image pickup device, and the focusing device on the basis of the specific parameter to acquire an image of the image pickup target specimen in each of a plurality of planes at different heights from the stage at each of a plurality of positions in a plane parallel to the stage.

## Description

### BACKGROUND OF THE INVENTION

### TECHNICAL FIELD

The present invention relates to a microscope system, and a control device and a control method for the microscope system.

### DESCRIPTION OF THE RELATED ART

In cytological diagnosis in pathological examination using a microscope, a liquid-based cytology (LBC) specimen may be used. For example, an LBC specimen is prepared by putting a specimen collected from a patient using a brush or the like in a vial together with a liquid, and performing dispersion, cell collection, and cell transfer.

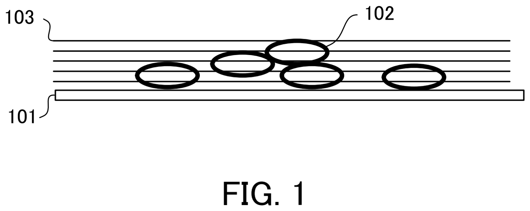

FIG. 1 shows an example of the LBC specimen. In the LBC specimen of FIG. 1, a plurality of cells 102 are overlapped and stacked on a glass slide 101. Therefore, the thickness of the LBC specimen is larger than a depth of field of the microscope, and thus it is difficult to pick up images of all cells with one focusing plane. Therefore, a method of generating a Z-stack image of the LBC specimen is used. A Z-stack image can be generated by shifting a focal plane 103 little by little at predetermined intervals in a thickness direction of the LBC specimen and picking up images.

Regarding the Z-stack image, systems for generating and visualizing three-dimensional virtual slides have been known (for example, see Patent Document 1 and Patent Document 2). Scanning technologies achieving both image quality and throughput at a high level have also been known (for example, see Patent Document 3).
Patent Document 1: United States Patent No. 7,689,024
Patent Document 2: Published Japanese Translation No. 2008-500643 of the PCT International Publication for Patent Application
Patent Document 3: Japanese Unexamined Patent Application, First Publication No. 2023-78801

### SUMMARY OF THE INVENTION

As an LBC specimen preparation method, there are a plurality of preparation methods. For example, when comparing LBC specimens prepared by the existing preparation methods M1 and M2, the shapes of ranges where cells are applied on a glass slide are the same, but the area of the application range in the preparation method M1 is larger than the area of the application range in the preparation method M2. In addition, the LBC specimen prepared by the preparation method M2 has a larger thickness than the LBC specimen prepared by the preparation method M1. As described above, the application range and the thickness of the LBC specimen may vary depending on the preparation method.

Therefore, in a microscope system that generates Z-stack images of LBC specimens prepared by a plurality of preparation methods, it is necessary to change the setting of the parameters for generating the Z-stack image each time the LBC specimen to be imaged is replaced, and the workload increases.

Such a problem occurs not only when Z-stack images of LBC specimens prepared by a plurality of preparation methods are generated, but also when Z-stack images of various types of specimens are generated.

According to one aspect, an object of the present invention is to efficiently acquire images of a specimen in a plurality of planes at different heights from a stage of a microscope.

In one idea, a microscope system includes an objective lens, a stage, a two-dimensional image pickup device, a focusing device, and a control unit. The two-dimensional image pickup device picks up an image of an image pickup target specimen on the stage. The focusing device changes a distance between the objective lens and the stage.

A control unit acquires a specific parameter that is used for picking up an image of the image pickup target specimen and selected according to a type of the image pickup target specimen from among a plurality of parameters, each of which is used for picking up an image of each of a plurality of types of specimens. Each of the plurality of parameters includes a parameter that is used for image pickup for acquiring an image of each of the plurality of types of specimens in each of a plurality of planes at different heights from the stage at each of a plurality of positions in a plane parallel to the stage.

The control unit controls the stage, the two-dimensional image pickup device, and the focusing device on the basis of the specific parameter to acquire an image of the image pickup target specimen in each of the plurality of planes at different heights from the stage at each of the plurality of position.

According to one aspect, it is possible to efficiently acquire images of a specimen in a plurality of planes at different heights from a stage of a microscope.

### BRIEF DESCRIPTION OF THE DRAWINGS

FIG. 1 is a diagram showing an LBC specimen.
FIG. 2 is a configuration diagram of a microscope system according to an embodiment.
FIG. 3A is a diagram showing an LBC specimen on a glass slide to which a label including a character string is attached.
FIG. 3B is a diagram showing an LBC specimen on a glass slide to which a label including a two-dimensional code is attached.
FIG. 4 is a diagram showing focus points.
FIG. 5A is a diagram showing a focusing plane generated by obtaining an average value of Z coordinates.
FIG. 5B is a diagram showing a focusing plane generated by plane approximation.
FIG. 5C is a diagram showing a focusing plane generated by curved surface approximation.
FIG. 5D is a diagram showing a focusing plane generated by linear interpolation.
FIG. 6 is a configuration diagram of a microscope device.
FIG. 7 is a diagram showing a specimen storage unit.
FIG. 8 is a functional configuration diagram of a control device.
FIG. 9 is a flowchart of first control processing.
FIG. 10 is a diagram showing a parameter selection screen.
FIG. 11 is a flowchart of second control processing.
FIG. 12 is a flowchart of third control processing.
FIG. 13 is a flowchart of fourth control processing.
FIG. 14 is a flowchart of fifth control processing.
FIG. 15 is a flowchart of correction processing.
FIG. 16 is a hardware configuration diagram of a first information processing device.
FIG. 17 is a hardware configuration diagram of a second information processing device.

### DETAILED DESCRIPTION

Hereinafter, embodiments will be described in detail with reference to the drawings.

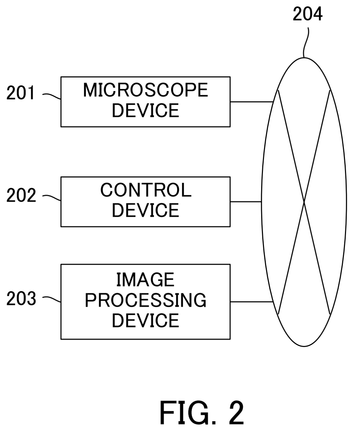

FIG. 2 shows an example of a configuration of a microscope system according to an embodiment. The microscope system of FIG. 2 includes a microscope device 201, a control device 202, and an image processing device 203, and generates whole slide imaging (WSI) images of a specimen. The microscope device 201, the control device 202, and the image processing device 203 are hardware.

The microscope device 201 communicates with the control device 202 and the image processing device 203 via a communication network 204. The communication network 204 is, for example, a local area network (LAN) or a wide area network (WAN).

The control device 202 selects a specific parameter set according to the type of an image pickup target specimen from among a plurality of parameter sets, each of which is used for picking up an image of each of a plurality of types of specimens, and outputs the selected specific parameter set to the microscope device 201.

The plurality of types of specimens include, for example, a plurality of types of LBC specimens to be used in pathological examination and tissue specimens to be used in pathological examination. The plurality of types of LBC specimens represent, for example, a plurality of preparation methods. The plurality of preparation methods may be the preparation methods M1 and M2, or may be three or more preparation methods including the preparation methods M1 and M2.

Since a tissue specimen is prepared by cutting a part of an organ or the like by a method called thin-sectioning, the tissue specimen has various planar shapes and has a small thickness. Therefore, it is not necessary to generate a Z-stack image of the tissue specimen. The tissue specimen is an example of a predetermined type of specimen.

The microscope device 201 scans the image pickup target specimen that is wider than the actual field of view to acquire a plurality of images of the image pickup target specimen, and outputs the images to the image processing device 203.

For example, when the image pickup target specimen is a tissue specimen, the microscope device 201 scans the entire range of the image pickup target specimen by repeatedly picking up images while moving an image pickup position in X and Y directions relative to the specimen on the stage. The X and Y directions represent two directions orthogonal to each other in a plane parallel to the stage. The image pickup position represents a position of the actual field of view indicated by the X and Y coordinates. In this case, in each image pickup, the image pickup position is set so that an image acquired at the above image pickup position overlaps with a part of an image acquired at an adjacent image pickup position. The image pickup position is an example of each position in a plane parallel to the stage.

When the image pickup target specimen is an LBC specimen, the microscope device 201 not only scans the range of the image pickup target specimen in the X and Y directions, but also moves the focal plane in a Z direction. For example, as shown in FIG. 1, the microscope device 201 acquires an image of the image pickup target specimen in each of a plurality of planes parallel to the stage by shifting the focal plane little by little in the Z direction from the stage at each image pickup position. Since LBC specimens prepared by the same preparation method have a substantially constant shape (plane shape, size, thickness, and the like), the XYZ range required for acquiring images is constant for each preparation method.

The Z direction represents a direction orthogonal to the X and Y directions, and corresponds to a thickness direction of the LBC specimen.

When the image pickup target specimen is a tissue specimen, the image processing device 203 generates a two-dimensional WSI image including one layer by merging in the X and Y directions a plurality of images output from the microscope device 201. The layer included in the two-dimensional WSI image means one wide field image generated by merging together images acquired at a plurality of image pickup positions along the focusing plane. The focusing plane represents a plane or a curved surface on which a large number of cells or the like included in the image pickup target specimen are focused.

When the image pickup target specimen is an LBC specimen, the image processing device 203 generates a three-dimensional WSI image including a plurality of layers in the same manner as in the case of the tissue specimen. The plurality of layers included in the three-dimensional WSI image includes a wide field image obtained by merging together images acquired at a plurality of image pickup positions along the focusing plane, and a predetermined number of wide field images obtained by merging together images acquired at a plurality of image pickup positions while shifting the focus to the upper side or the lower side of the focusing plane.

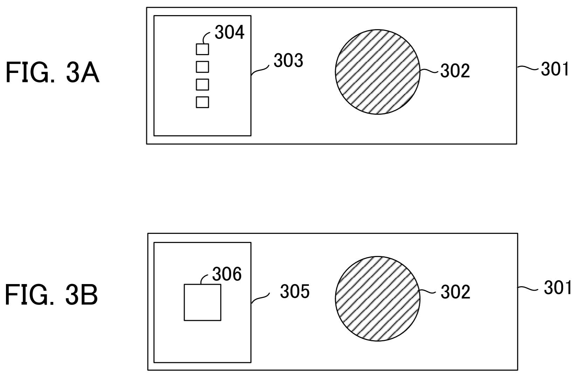

FIGS. 3A and 3B show an example of an LBC specimen on a labeled glass slide. FIGS. 3A and 3B are plan views of an upper surface of a glass slide 301.

FIG. 3A shows an example of the glass slide 301 to which a label 303 including a character string 304 is attached. An LBC specimen 302 is applied on the glass slide 301. The character string 304 described on the label 303 represents, for example, the name and the preparation method of the LBC specimen 302. The character string 304 is an example of a character string indicating the type of the image pickup target specimen.

FIG. 3B shows an example of the glass slide 301 to which a label 305 including a two-dimensional code 306 is attached. An LBC specimen 302 is applied on the glass slide 301. The two-dimensional code 306 described on the label 303 represents, for example, a preparation method or a specimen ID of the LBC specimen 302. The specimen ID is identification information of the LBC specimen 302. The two-dimensional code 306 is an example of a code indicating the type or the identification information of the image pickup target specimen.

The parameter set that is used for picking up an image of the LBC specimen 302 includes, for example, an image pickup range for images of the image pickup target specimen, a plurality of focus points, a Z-step width, the number of focusing plane upper surface layers, and the number of focusing plane lower surface layers.

The image pickup range represents a range where the LBC specimen 302 is applied on the glass slide 301. When the LBC specimen 302 is prepared by the preparation method M1 or M2, the shape of the application range is circular. Therefore, the X and Y coordinates of a center position of a circle representing the application range, and the size of the circle are set as the image pickup range.

As the size of the circle, for example, a radius or a diameter is used. The microscope device 201 scans the image pickup range in the X and Y directions, and thus acquires an image of the LBC specimen 302 at each image pickup position. For example, the size of the image pickup range of the LBC specimen prepared by the preparation method M1 is larger than the size of the image pickup range of the LBC specimen prepared by the preparation method M2.

The focus point represents a position in the image pickup range used to generate the focusing plane.

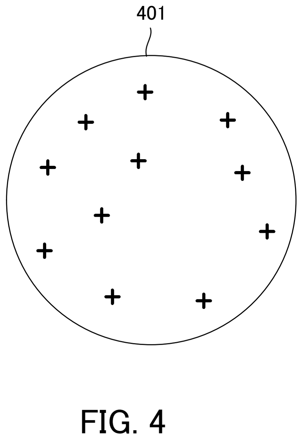

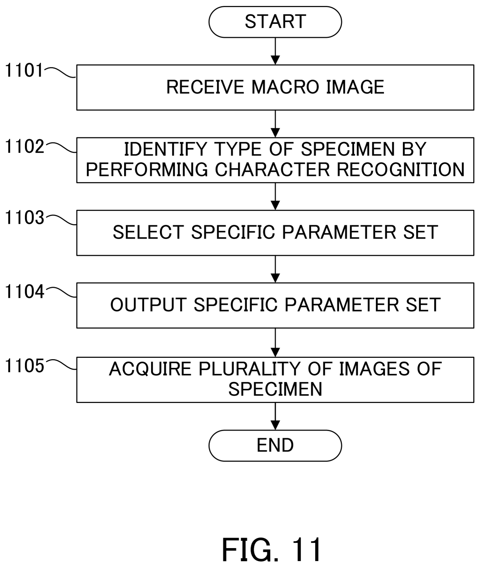

FIG. 4 shows an example of the focus points. The symbol "+" in an image pickup range 401 indicates the position of the focus point. In the example of FIG. 4, 11 focus points are set. The position of each focus point is designated using the X and Y coordinates.

The microscope device 201 obtains a Z coordinate when the LBC specimen 302 is focused at each focus point, and generates the focusing plane using the Z coordinates of the plurality of focus points.

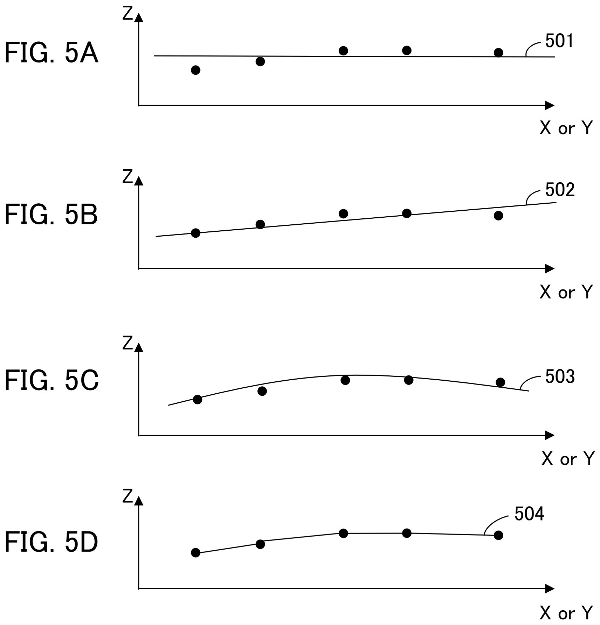

FIGS. 5A to 5D show an example of the focusing plane. In FIGS. 5A to 5D, the horizontal axis represents the X or Y axis, and the vertical axis represents the Z axis. The black dot represents the Z coordinate when the LBC specimen 302 is focused at each focus point.

FIG. 5A shows an example of a focusing plane generated by obtaining an average value of Z coordinates. As indicated by a straight line 501, the microscope device 201 obtains an average value of the Z coordinates of a plurality of focus points, and obtains a plane that passes through a point on the Z axis indicated by the average value and is parallel to the X and Y axes as a focusing plane.

FIG. 5B shows an example of a focusing plane generated by plane approximation. As indicated by a straight line 502, the microscope device 201 performs plane approximation using the X coordinates, the Y coordinates, and the Z coordinates of a plurality of focus points to obtain a focusing plane.

FIG. 5C shows an example of a focusing plane generated by curved surface approximation. As indicated by a curved line 503, the microscope device 201 performs curved surface approximation using the X coordinates, the Y coordinates, and the Z coordinates of a plurality of focus points to obtain a focusing plane.

FIG. 5D shows an example of a focusing plane generated by linear interpolation. As indicated by a broken line 504, the microscope device 201 performs linear interpolation using the X coordinates, the Y coordinates, and the Z coordinates of a plurality of focus points to obtain a focusing plane.

The Z-step width indicates an interval between layers in the Z direction. The number of focusing plane upper surface layers indicates the number of layers on the upper side of the focusing plane, and the number of focusing plane lower surface layers indicates the number of layers on the lower side of the focusing plane. The microscope device 201 acquires images of the LBC specimen 302 on the focusing plane at the respective image pickup positions, acquires images of the LBC specimen 302 of the number of focusing plane upper surface layers on the upper side of the focusing plane at the respective image pickup positions, and acquires images of the LBC specimen 302 of the number of focusing plane lower surface layers on the lower side of the focusing plane at the respective image pickup positions.

The image pickup range, the focus points, the Z-step width, the number of focusing plane upper surface layers, and the number of focusing plane lower surface layers are examples of a parameter that is used for image pickup for acquiring an image of each of a plurality of types of specimens in each of a plurality of planes at different heights from the stage at each of a plurality of positions in a plane parallel to the stage.

For example, the number of focusing plane upper surface layers of the LBC specimen prepared by the preparation method M2 is larger than the number of focusing plane upper surface layers of the LBC specimen prepared by the preparation method M1. In addition, the number of focusing plane lower surface layers of the LBC specimen prepared by the preparation method M2 is larger than the number of focusing plane lower surface layers of the LBC specimen prepared by the preparation method M1.

The parameter set that is used for picking up an image of a tissue specimen includes, for example, an image pickup range and a plurality of focus points. The microscope device 201 generates a focusing plane in the same manner as in the case of the LBC specimen 302, and acquires images of the tissue specimen on the focusing plane at the respective image pickup positions. The parameters that are used for picking up an image of a tissue specimen are examples of a predetermined parameter.

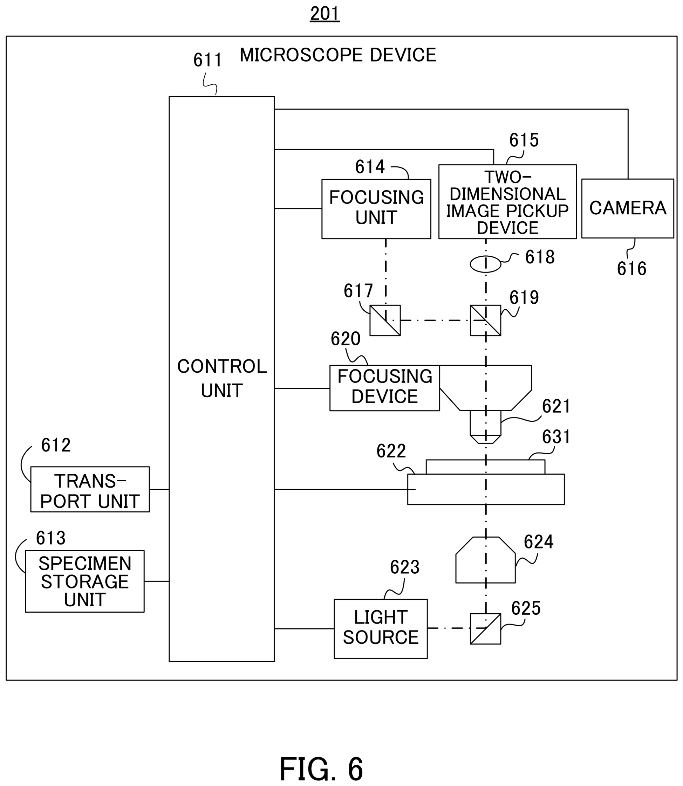

FIG. 6 shows an example of a configuration of the microscope device 201 of FIG. 2. The microscope device 201 of FIG. 6 is an upright microscope and includes a control unit 611, a transport unit 612, a specimen storage unit 613, a focusing unit 614, a two-dimensional image pickup device 615, a camera 616, a mirror 617, an imaging lens 618, and a splitter 619. The microscope device 201 further includes a focusing device 620, an objective lens 621, a stage 622, a light source 623, an illumination optical system 624, and a mirror 625. These components are hardware.

The light source 623 emits light according to a control signal from the control unit 611. The illumination light from the light source 623 is reflected by the mirror 625, and then irradiated onto a glass slide 631 placed on the stage 622 via the illumination optical system 624. A specimen is applied or placed on the glass slide 631. The specimen on the glass slide 631 is an example of an image pickup target specimen.

The optical axis of the objective lens 621 represents the Z direction. The objective lens 621 moves in the Z direction by an operation of the focusing device 620.

The stage 622 moves according to a control signal from the control unit 611. The stage 622 moves at least in the X and Y directions orthogonal to the optical axis of the objective lens 621. The stage 622 may further move in the Z direction. The stage 622 may include an actuator that includes a stepping motor and a ball screw (not shown), and the position of the stage 622 may be controlled by controlling the actuator in an open-loop manner.

The light transmitted through the specimen on the glass slide 631 is incident on the splitter 619 via the objective lens 621. The splitter 619 splits the incident light into two, guides one light to the imaging lens 618, and guides the other light to the mirror 617. The light passing through the imaging lens 618 is incident on the two-dimensional image pickup device 615, and the light reflected by the mirror 617 is incident on the focusing unit 614.

The two-dimensional image pickup device 615 picks up an image of the specimen on the glass slide 631 according to a control signal from the control unit 611 to acquire an image of the specimen, and outputs the acquired image to the control unit 611. The two-dimensional image pickup device 615 may be a complementary metal-oxide-semiconductor (CMOS) image sensor.

The focusing device 620 changes a distance between the objective lens 621 and the stage 622. The focusing device 620 moves the objective lens 621 in the Z direction according to a control signal from the control unit 611. The focusing unit 614 detects a focusing position in the Z direction from the incident light by, for example, an optical path length difference method, and outputs focusing evaluation information indicating the detected focusing position to the control unit 611.

The control unit 611 determines whether the objective lens 621 is to be moved upward or downward by using the focusing evaluation information, and controls the focusing device 620. Accordingly, the focusing device 620 moves the objective lens 621 in the Z direction so as to focus on the specimen on the glass slide 631. The control unit 611 can determine whether the objective lens 621 is to be moved upward or downward by using the control method described in Patent Document 3.

The specimen storage unit 613 stores one or more glass slides 631. The transport unit 612 transports any glass slide 631 from the specimen storage unit 613 to the stage 622 according to a control signal from the control unit 611.

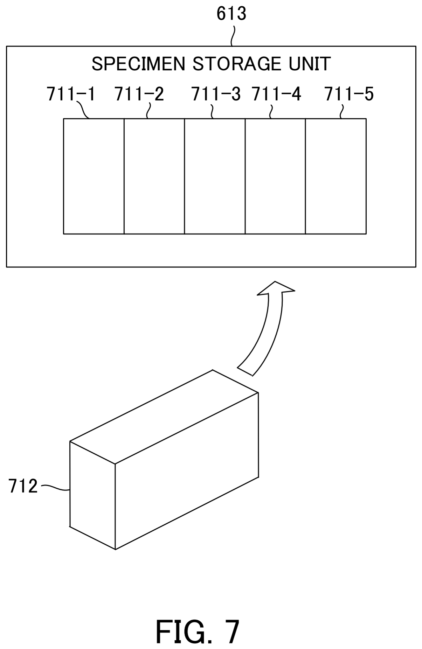

FIG. 7 shows an example of the specimen storage unit 613 of FIG. 6. The specimen storage unit 613 of FIG. 7 has insertion ports 711-1 to 711-5. The insertion port 711-i (i = 1 to 5) is an example of a housing unit. The number of the insertion ports 711-i may be 4 or less or 6 or more.

A user houses one or more glass slides 631 in a rack 712, and inserts the rack 712 into any insertion ports 711-i. The control unit 611 controls the transport unit 612 to transport each glass slide 631 from the rack 712 inserted into the insertion port 711-i to the stage 622.

The camera 616 picks up an image of the glass slide 631 placed on the stage 622 according to a control signal from the control unit 611 to acquire a macro image of the glass slide 631. Then, the camera 616 outputs the acquired macro image to the control unit 611. The camera 616 is an example of an image pickup apparatus that acquires a macro image of an image pickup target specimen.

The control unit 611 controls the transport unit 612, the specimen storage unit 613, the focusing unit 614, the two-dimensional image pickup device 615, the camera 616, the focusing device 620, the stage 622, and the light source 623. The control unit 611 receives the specific parameter set from the control device 202, and controls the focusing unit 614, the two-dimensional image pickup device 615, the focusing device 620, and the stage 622 according to the received parameter set to scan the specimen on the glass slide 631.

For example, when the specimen is a tissue specimen, the control unit 611 controls the focusing device 620 to move the objective lens 621 in the Z direction so as to focus on the specimen at each focus point included in the parameter set. The control unit 611 obtains a Z coordinate when the specimen is focused at each focus point, and generates the focusing plane using the Z coordinates of the plurality of focus points as shown in FIGS. 5A to 5D.

Next, while moving the stage 622 in the X and Y directions to cover the image pickup range included in the parameter set, the control unit 611 causes the two-dimensional image pickup device 615 to pick up an image of the specimen on the glass slide 631 along the focusing plane. Therefore, the control unit 611 acquires a plurality of images covering the image pickup range and outputs the images to the image processing device 203.

When the specimen is an LBC specimen, the control unit 611 generates the focusing plane in the same manner as in the case of the tissue specimen. Next, while moving the stage 622 in the X and Y directions so as to cover the image pickup range included in the parameter set, the control unit 611 causes the two-dimensional image pickup device 615 to pick up an image of the specimen on the glass slide 631.

In this case, the control unit 611 controls the focusing device 620 to move the objective lens 621 in the Z direction so that images of a plurality of planes having an interval indicated by the Z-step width are acquired at the respective image pickup positions on the specimen. The images of the plurality of planes include images on the focusing plane at the respective image pickup positions, images of the planes of the number of focusing plane upper surface layers on the upper side of the focusing plane, and images of the planes of the number of focusing plane lower surface layers on the lower side of the focusing plane.

Therefore, the control unit 611 acquires images on the focusing plane at the respective image pickup positions, images of the number of focusing plane upper surface layers at the respective image pickup positions, and images of the number of focusing plane lower surface layers at the respective image pickup positions, and outputs the images to the image processing device 203.

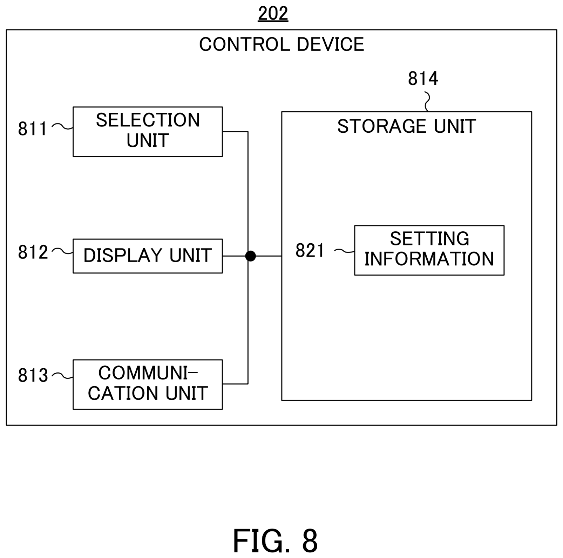

FIG. 8 shows an example of a functional configuration of the control device 202 of FIG. 2. The control device 202 of FIG. 8 includes a selection unit 811, a display unit 812, a communication unit 813, and a storage unit 814.

The storage unit 814 stores setting information 821 including a plurality of parameter sets. The respective parameter sets are used for picking up images of a plurality of types of specimens, and are set in advance for the respective types of specimens. In the setting information 821, a plurality of parameter sets is associated with a plurality of types, respectively. The setting information 821 is an example of parameter association information that associates each of a plurality of types with each of a plurality of parameters, each of which is used for picking up an image of each of the plurality of types of specimens.

The communication unit 813 communicates with the microscope device 201 via the communication network 204. The selection unit 811 selects the specific parameter set according to the type of the specimen on the glass slide 631 from among the plurality of parameter sets included in the setting information 821, and outputs the specific parameter set to the microscope device 201 via the communication unit 813. The display unit 812 displays a parameter selection screen in accordance with an instruction from the selection unit 811.

The selection unit 811 can select a specific parameter set using, for example, any one of selection methods P1 to P5.

In the selection method P1, the selection unit 811 displays a parameter selection screen on the display unit 812. The parameter selection screen includes parameter identification information indicating each of the plurality of parameter sets included in the setting information 821. The selection unit 811 selects, as a specific parameter set, the parameter set indicated by specific parameter identification information selected by a user from the parameter identification information included in the parameter selection screen.

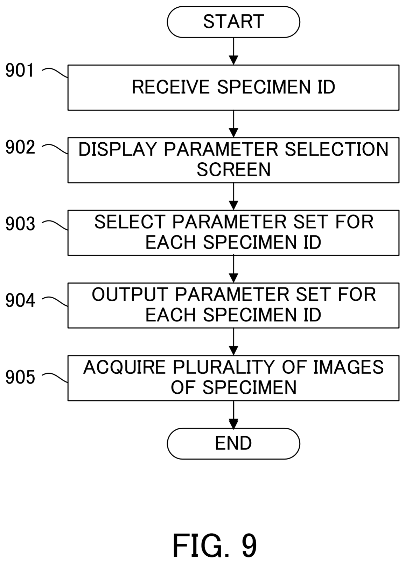

FIG. 9 is a flowchart showing an example of first control processing using the selection method P1. In the selection method P1, a user houses one or more glass slides 631 in the rack 712, and inserts the rack 712 into any insertion ports 711-i, as shown in FIG. 7. The control unit 611 of the microscope device 201 acquires identification information indicating the specimen on each glass slide 631 in the rack 712 inserted into the insertion port 711-i, and outputs the identification information to the control device 202.

The selection unit 811 receives a specimen ID indicating the specimen on each glass slide 631 in the rack 712 from the microscope device 201 via the communication unit 813 (Step 901). The specimen ID is identification information indicating the specimen on the glass slide 631. Then, the selection unit 811 causes the display unit 812 to display a parameter selection screen including the received specimen IDs (Step 902).

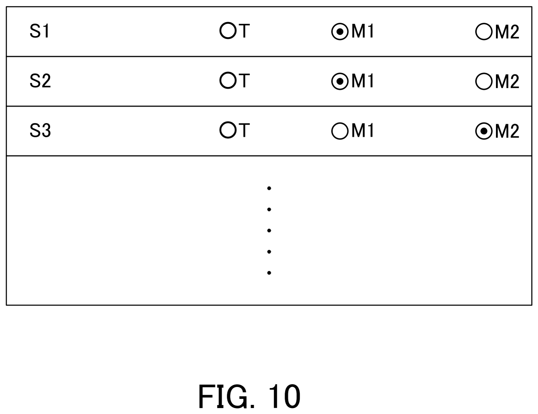

FIG. 10 shows an example of a parameter selection screen. In FIG. 10, S1, S2, and S3 correspond to specimen IDs indicating specimens on the glass slides 631, and T, M1, and M2 correspond to parameter identification information indicating parameter sets. T indicates a parameter set of a tissue specimen, M1 indicates a parameter set of an LBC specimen prepared by the preparation method M1, and M2 indicates a parameter set of an LBC specimen prepared by the preparation method M2.

The user selects any parameter identification information from among T, M1, and M2 for each specimen ID. In the example of FIG. 10, M1 is selected for S1 and S2, and M2 is selected for S3.

The selection unit 811 selects the parameter set indicated by the parameter identification information selected for each specimen ID from among the plurality of parameter sets included in the setting information 821, as a specific parameter set of the specimen indicated by the specimen ID (Step 903). Then, the selection unit 811 outputs the parameter set for each specimen ID to the microscope device 201 via the communication unit 813 (Step 904).

Every time each glass slide 631 in the rack 712 is transported to the stage 622, the control unit 611 of the microscope device 201 selects the parameter set of the specimen ID indicating the specimen on the glass slide 631 from among the parameter sets for each specimen ID. The control unit 611 controls the focusing unit 614, the two-dimensional image pickup device 615, the focusing device 620, and the stage 622 using the selected parameter set to acquire a plurality of images of the specimen (Step 905).

In the selection methods P2 to P4, the selection unit 811 identifies the type of the specimen on the glass slide 631 from the information shown in a macro image of the glass slide 631, and selects the parameter set corresponding to the type of the specimen as a specific parameter set by using the setting information 821.

In the selection method P2, the information shown in the macro image is, for example, the character string 304 shown in FIG. 3A, and the character string 304 indicates the type of the specimen. The selection unit 811 identifies the type of the specimen by performing character recognition of the character string shown in the macro image.

FIG. 11 is a flowchart showing an example of second control processing using the selection method P2. In the selection method P2, the control unit 611 of the microscope device 201 causes the camera 616 to pick up an image of the glass slide 631 on the stage 622 to acquire a macro image of the glass slide 631, and outputs the macro image to the control device 202.

The selection unit 811 receives the macro image from the microscope device 201 via the communication unit 813 (Step 1101), and performs character recognition of the character string shown in the macro image to identify the type of the specimen (Step 1102).

Next, the selection unit 811 selects the parameter set corresponding to the identified type of the specimen from among the plurality of parameter sets included in the setting information 821, as a specific parameter set of the specimen on the glass slide 631 (Step 1103). Then, the selection unit 811 outputs the specific parameter set to the microscope device 201 via the communication unit 813 (Step 1104).

The control unit 611 of the microscope device 201 controls the focusing unit 614, the two-dimensional image pickup device 615, the focusing device 620, and the stage 622 using the parameter set received from the control device 202 to acquire a plurality of images of the specimen (Step 1105).

In the selection method P3, the information shown in the macro image is, for example, the two-dimensional code 306 shown in FIG. 3B, and the two-dimensional code 306 indicates the type of the specimen. The selection unit 811 identifies the type of the specimen by reading the two-dimensional code shown in the macro image. The information shown in the macro image may be a barcode indicating the type of the specimen.

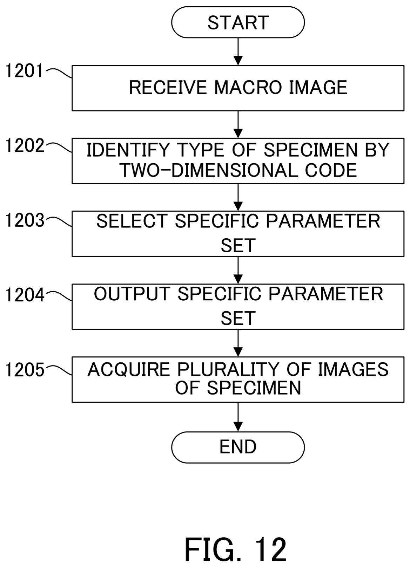

FIG. 12 is a flowchart showing an example of third control processing using the selection method P3. In the selection method P3, the control unit 611 of the microscope device 201 causes the camera 616 to pick up an image of the glass slide 631 on the stage 622 to acquire a macro image of the glass slide 631, and outputs the macro image to the control device 202.

The selection unit 811 receives the macro image from the microscope device 201 via the communication unit 813 (Step 1201), and reads the two-dimensional code shown in the macro image to identify the type of the specimen (Step 1202).

Next, the selection unit 811 selects the parameter set corresponding to the identified type of the specimen from among the plurality of parameter sets included in the setting information 821, as a specific parameter set of the specimen on the glass slide 631 (Step 1203). Then, the selection unit 811 outputs the specific parameter set to the microscope device 201 via the communication unit 813 (Step 1204).

The control unit 611 of the microscope device 201 controls the focusing unit 614, the two-dimensional image pickup device 615, the focusing device 620, and the stage 622 using the parameter set received from the control device 202 to acquire a plurality of images of the specimen (Step 1205).

In the selection method P4, the information shown in the macro image is, for example, the two-dimensional code 306 shown in FIG. 3B, and the two-dimensional code 306 indicates the specimen ID of the specimen. The storage unit 814 further stores type association information that associates each of specimen IDs of a plurality of types of specimens with each of the plurality of types.

The selection unit 811 identifies the specimen ID of the specimen by reading the two-dimensional code shown in the macro image, and identifies the type of the specimen corresponding to the identified specimen ID by using the type association information. The information shown in the macro image may be a barcode indicating the specimen ID of the specimen.

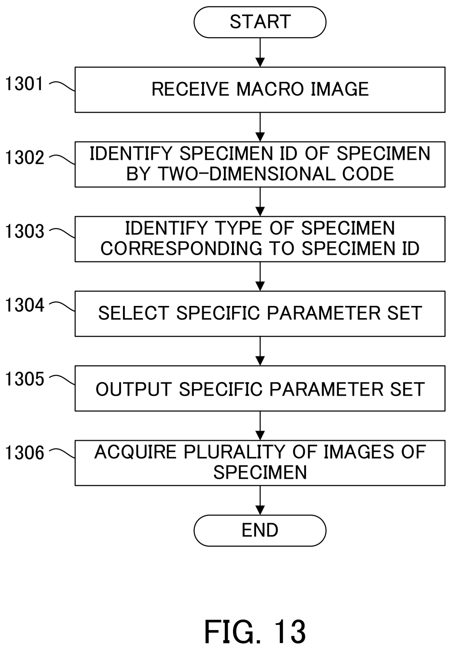

FIG. 13 is a flowchart showing an example of fourth control processing using the selection method P4. In the selection method P4, the control unit 611 of the microscope device 201 causes the camera 616 to pick up an image of the glass slide 631 on the stage 622 to acquire a macro image of the glass slide 631, and outputs the macro image to the control device 202.

The selection unit 811 receives the macro image from the microscope device 201 via the communication unit 813 (Step 1301). Then, the selection unit 811 identifies the specimen ID of the specimen by reading the two-dimensional code shown in the macro image (Step 1302), and identifies the type of the specimen corresponding to the identified specimen ID by using the type association information (Step 1303).

Next, the selection unit 811 selects the parameter set corresponding to the identified type of the specimen from among the plurality of parameter sets included in the setting information 821, as a specific parameter set of the specimen on the glass slide 631 (Step 1304). Then, the selection unit 811 outputs the specific parameter set to the microscope device 201 via the communication unit 813 (Step 1305).

The control unit 611 of the microscope device 201 controls the focusing unit 614, the two-dimensional image pickup device 615, the focusing device 620, and the stage 622 using the parameter set received from the control device 202 to acquire a plurality of images of the specimen (Step 1306).

Instead of the storage unit 814 that stores the type association information, a database (not shown) may store the type association information. When a database stores the type association information, in Step 1303, the selection unit 811 outputs the specified specimen ID to the database via the communication unit 813, and receives the type of the specimen corresponding to the specimen ID from the database.

In the selection method P5, the storage unit 814 stores another setting information R instead of the setting information 821. In the setting information R, a plurality of parameter sets are associated with the plurality of insertion ports 711-i of the specimen storage unit 613, respectively. The setting information R is an example of parameter association information that associates each of a plurality of housing units with each of a plurality of parameters, each of which is used for picking up an image of each of a plurality of types of specimens.

A user houses one or more glass slides 631 of the same type in the rack 712, and inserts the rack 712 into a specific insertion port 711-i corresponding to the type of the specimen on the glass slide 631.

The control unit 611 of the microscope device 201 controls the transport unit 612 to transport any glass slide 631 from the rack 712 inserted into the specific insertion port 711-i to the stage 622. Then, the control unit 611 acquires a specific insertion port ID indicating the specific insertion port 711-i, and outputs the specific insertion port ID to the control device 202. The insertion port ID is identification information indicating the insertion port 711-i. The selection unit 811 selects the parameter set corresponding to the specific insertion port 711-i indicated by the specific insertion port ID as a specific parameter set by using the setting information R.

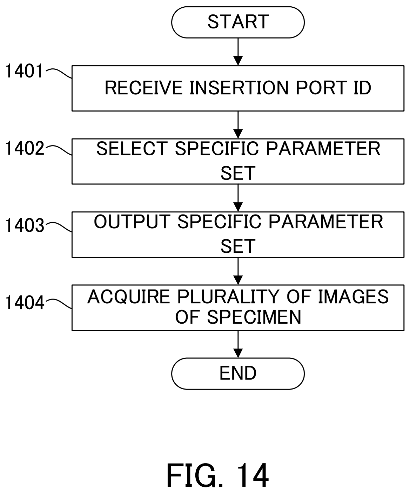

FIG. 14 is a flowchart showing an example of fifth control processing using the selection method P5. First, the selection unit 811 receives a specific insertion port ID from the microscope device 201 via the communication unit 813 (Step 1401).

Next, the selection unit 811 selects the parameter set corresponding to the received insertion port ID from among the plurality of parameter sets included in the setting information R, as a specific parameter set of the specimen on the glass slide 631 transported to the stage 622 (Step 1402). Then, the selection unit 811 outputs the specific parameter set to the microscope device 201 via the communication unit 813 (Step 1403).

The control unit 611 of the microscope device 201 controls the focusing unit 614, the two-dimensional image pickup device 615, the focusing device 620, and the stage 622 using the parameter set received from the control device 202 to acquire a plurality of images of the specimen (Step 1404).

According to the microscope system of FIG. 2, as a specimen image acquisition parameter, the image acquisition range is set according to the type of the specimen. Specifically, when the type of the specimen is an LBC specimen, the XY range and the Z range according to the preparation method of the LBC specimen are set, and when the type of the specimen is a tissue specimen, the Z direction is set to have only one focusing plane.

For example, when the specimen is an LBC specimen, parameters that are used for picking up images in a plurality of planes at different heights from the stage 622 of the microscope device 201 are set according to the LBC specimen on the stage 622. This eliminates the need for the user to change the setting of the parameters for generating a Z-stack image every time the LBC specimen as an image pickup target is replaced. Therefore, images of the specimen in the plurality of planes at different heights from the stage 622 can be efficiently acquired.

Even when LBC specimens and tissue specimens are mixed as specimens stored in the specimen storage unit 613, it is possible to reduce the complexity of setting the image acquisition parameters and efficiently acquire the image.

According to the selection methods P2 to P5, since the parameters that are used for picking up an image of the specimen on the glass slide 631 are automatically selected, the user does not need to select the parameters for each specimen. Therefore, the workload of the user is reduced.

Instead of separately providing the microscope device 201, the control device 202, and the image processing device 203, the microscope device 201 may also have the functions of either the control device 202 or the image processing device 203. In addition, the microscope device 201 may have both the functions of the control device 202 and the image processing device 203, and the control device 202 may also have the functions of the image processing device 203.

When the specimen is an LBC specimen, a slight deviation occurs in the application range on the glass slide 631 for each specimen. Therefore, it is desirable to adjust the image pickup range included in the parameter set according to the application range of each specimen. In this case, the selection unit 811 may correct the image pickup range included in the parameter set on the basis of the range of the specimen shown in the macro image.

For example, as shown in FIGS. 3A and 3B, when the application range has a circular shape, the selection unit 811 calculates the X and Y coordinates of a center position of a circle representing the range of the specimen shown in the macro image. Then, the selection unit 811 corrects the image pickup range by replacing the X and Y coordinates of the center position with the calculated X and Y coordinates without changing the size of the circle representing the image pickup range. The focus points, the Z-step width, the number of focusing plane upper surface layers, and the number of focusing plane lower surface layers included in the parameter set are not changed.

By correcting the image pickup range included in the parameter set on the basis of the range of the specimen shown in the macro image, the user does not need to adjust the image pickup range for each specimen. Therefore, the workload of the user is reduced.

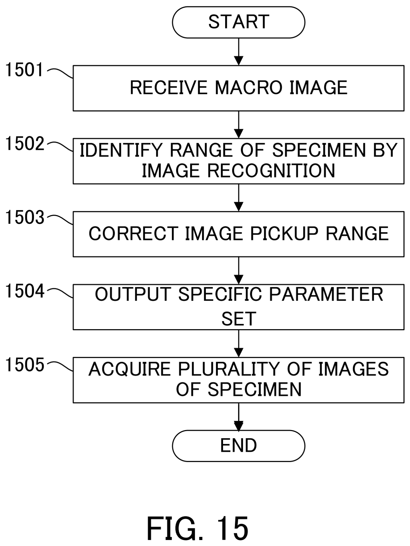

FIG. 15 is a flowchart showing an example of correction processing for correcting the image pickup range. The control unit 611 of the microscope device 201 causes the camera 616 to pick up an image of the glass slide 631 on the stage 622 to acquire a macro image of the glass slide 631, and outputs the macro image to the control device 202.

The selection unit 811 receives the macro image from the microscope device 201 via the communication unit 813 (Step 1501), and identifies the range of the specimen shown in the macro image by image recognition (Step 1502).

Next, the selection unit 811 corrects the image pickup range included in the specific parameter set selected using any one of the selection methods P1 to P5 according to the identified range of the specimen (Step 1503). Then, the selection unit 811 outputs the specific parameter set including the corrected image pickup range to the microscope device 201 via the communication unit 813 (Step 1504).

The control unit 611 of the microscope device 201 controls the focusing unit 614, the two-dimensional image pickup device 615, the focusing device 620, and the stage 622 using the parameter set received from the control device 202 to acquire a plurality of images of the specimen (Step 1505).

The configuration of the microscope system of FIG. 2 is merely an example, and some components may be omitted or changed depending on the application or condition of the microscope system.

The configuration of the microscope device 201 of FIG. 6 is merely an example, and some components may be omitted or changed depending on the application or condition of the microscope system. For example, the microscope device 201 may be an inverted microscope. The microscope device 201 may detect a focusing position by an image plane phase difference method instead of the optical path length difference method. When identifying the type of the image pickup target specimen, a reader device such as a barcode reader for reading information to identify the type of the specimen may be provided separately from the macro camera. In this case, the type of the image pickup target specimen is identified using the information read by the reader device, rather than using the information shown in the macro image.

The configuration of the specimen storage unit 613 of FIG. 7 is merely an example, and some components may be omitted or changed depending on the application or conditions of the microscope device 201.

The configuration of the control device 202 of FIG. 8 is merely an example, and some components may be omitted or changed depending on the application or condition of the microscope system. For example, when any one of the selection methods P2 to P5 is used, the display unit 812 can be omitted.

The LBC specimen shown in FIG. 1 is merely an example, and the LBC specimen varies depending on a sample collected from a patient and the preparation method. The image pickup target specimen may be a substance other than the sample. The substance other than the sample is a substance collected from the atmosphere, water, ground, or space, an artificially synthesized substance, or the like.

The labels shown in FIGS. 3A and 3B are merely examples, and the label attached to the glass slide varies depending on the application or condition of the microscope system. The focus points shown in FIG. 4 are merely examples, and the focus points included in the parameter set vary depending on the application or condition of the microscope system. The focusing planes shown in FIGS. 5A to 5D are merely examples, and the focusing plane may be generated by another method. The parameter selection screen shown in FIG. 10 is merely an example, and the display unit 812 may display a parameter selection screen in another format.

The flowcharts of FIGS. 9 and 11 to 15 are merely examples, and a part of the processing may be omitted or changed depending on the configuration or conditions of the microscope system.

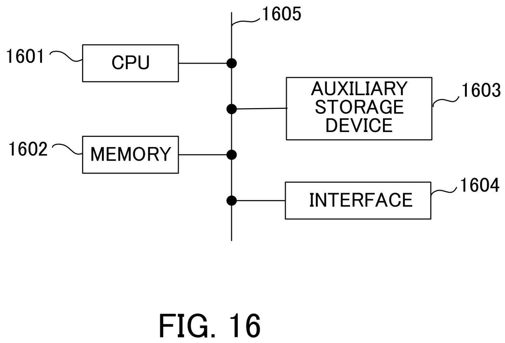

FIG. 16 shows an example of a hardware configuration of a first information processing device used as the control unit 611 of FIG. 6. The information processing device of FIG. 16 includes a central processing unit (CPU) 1601, a memory 1602, an auxiliary storage device 1603, and an interface 1604. These components are hardware, and are connected to each other by a bus 1605.

The memory 1602 is, for example, a semiconductor memory such as a read only memory (ROM) or a random access memory (RAM), and stores programs and data used for processing.

The CPU 1601 (processor) executes a program using the memory 1602, for example, to perform the processing of the control unit 611.

The auxiliary storage device 1603 is, for example, a magnetic disk device, an optical disk device, a magneto optical disk device, a tape device, or the like. The auxiliary storage device 1603 may be a hard disk drive or a solid state drive (SSD). The information processing device can store programs and data in the auxiliary storage device 1603, and use the programs and data by loading them into the memory 1602.

The interface 1604 is a communication device that is connected to a communication line or the like and performs data conversion accompanying communication.

The control unit 611 communicates with the transport unit 612, the specimen storage unit 613, the focusing unit 614, the two-dimensional image pickup device 615, the camera 616, the focusing device 620, the stage 622, and the light source 623 via the interface 1604. The control unit 611 also communicates with the control device 202 and the image processing device 203 via the interface 1604.

As the image processing device 203 of FIG. 2, an information processing device similar to that of FIG. 16 can be used.

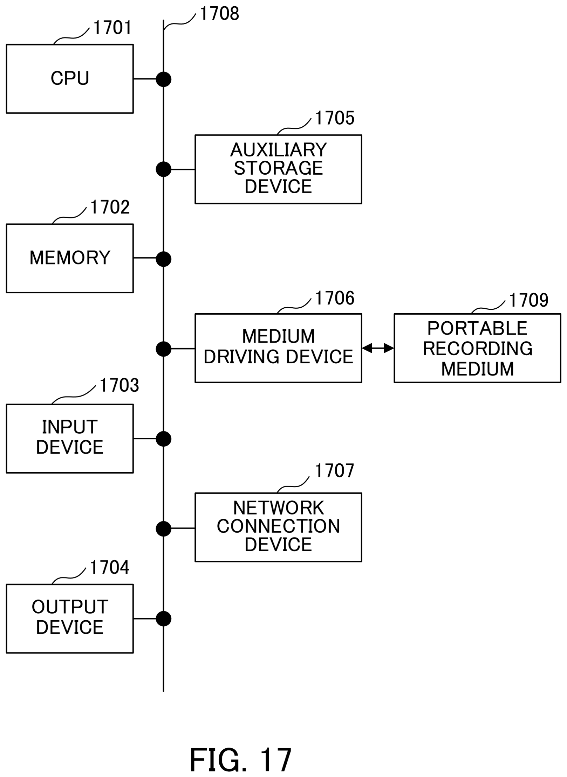

FIG. 17 shows an example of a hardware configuration of a second information processing device used as the control device 202 of FIG. 8. The information processing device of FIG. 17 includes a CPU 1701, a memory 1702, an input device 1703, an output device 1704, an auxiliary storage device 1705, a medium driving device 1706, and a network connection device 1707. These components are hardware, and are connected to each other by a bus 1708.

The memory 1702 is, for example, a semiconductor memory such as a ROM or a RAM, and stores programs and data used for processing. The memory 1702 may operate as the storage unit 814 of FIG. 8.

The CPU 1701 operates as the selection unit 811 of FIG. 8 by executing a program using the memory 1702, for example.

The input device 1703 is, for example, a keyboard, a pointing device, or the like, and is used for inputting an instruction or information from a user. The output device 1704 is, for example, a display device, a printer, a speaker, or the like, and is used for outputting an inquiry or an instruction to the user and a processing result. The output device 1704 may operate as the display unit 812 of FIG. 8. The inquiry may be a parameter selection screen.

The auxiliary storage device 1705 is, for example, a magnetic disk device, an optical disk device, a magneto optical disk device, a tape device, a flash memory, or the like. The auxiliary storage device 1705 may be a hard disk drive or an SSD. The information processing device can store programs and data in the auxiliary storage device 1705, and use the programs and data by loading them into the memory 1702. The auxiliary storage device 1705 may operate as the storage unit 814 of FIG. 8.

The medium driving device 1706 drives a portable recording medium 1709 and accesses the recorded content thereof. The portable recording medium 1709 is a memory device, a flexible disk, an optical disk, a magneto optical disk, or the like. The portable recording medium 1709 may be a compact disk read only memory (CD-ROM), a digital versatile disk (DVD), a universal serial bus (USB) memory, or the like. A user can store programs and data in the portable recording medium 1709, and use the programs and data by loading them into the memory 1702.

The computer-readable recording medium that stores programs and data used for processing as above is a physical (non-transitory) recording medium such as the memory 1702, the auxiliary storage device 1705, or the portable recording medium 1709.

The network connection device 1707 is a communication device that is connected to the communication network 204 and performs data conversion accompanying communication. The information processing device can receive programs and data from an external device via the network connection device 1707, and use the programs and data by loading them into the memory 1702. The network connection device 1707 may operate as the communication unit 813 of FIG. 8.

The information processing device does not need to include all the components of FIG. 17, and some components can be omitted depending on the application or condition. For example, when no interface with the user is required, the input device 1703 and the output device 1704 may be omitted. When the portable recording medium 1709 is not used, the medium driving device 1706 may be omitted.

Although the disclosed embodiments and their advantages have been described in detail, those skilled in the art will be able to make various changes, additions, and omissions without departing from the scope of the present invention as clearly set forth in the claims.

## Claims

1. A microscope system comprising:
an objective lens;
a stage;
a two-dimensional image pickup device configured to pick up an image of an image pickup target specimen on the stage;
a focusing device configured to change a distance between the objective lens and the stage; and
a control unit configured to acquire a specific parameter that is used for picking up the image of the image pickup target specimen and selected according to a type of the image pickup target specimen from among a plurality of parameters, each of which is used for picking up an image of each of a plurality of types of specimens, and control the stage, the two-dimensional image pickup device, and the focusing device on a basis of the specific parameter to acquire an image of the image pickup target specimen in each of a plurality of planes at different heights from the stage at each of a plurality of positions in a plane parallel to the stage,
wherein each of the plurality of parameters includes a parameter that is used for image pickup for acquiring an image of each of the plurality of types of specimens in each of the plurality of planes at each of the plurality of positions.

2. The microscope system according to claim 1, further comprising:
a storage unit configured to store the plurality of parameters;
a selection unit configured to select the specific parameter according to the type of the image pickup target specimen from among the plurality of parameters, and output the specific parameter to the control unit; and
a display unit,
wherein the selection unit is configured to cause the display unit to display parameter identification information indicating each of the plurality of parameters, and select, as the specific parameter, a parameter indicated by specific parameter identification information selected by a user from among the parameter identification information of the plurality of types of specimens.

3. The microscope system according to claim 1, further comprising:
a storage unit configured to store parameter association information that associates each of the plurality of types with each of the plurality of parameters;
a selection unit configured to select the specific parameter according to the type of the image pickup target specimen from among the plurality of parameters, and output the specific parameter to the control unit; and
an image pickup apparatus configured to acquire a macro image of the image pickup target specimen,
wherein the selection unit is configured to identify the type of the image pickup target specimen from information shown in the macro image, and select a parameter corresponding to the type of the image pickup target specimen as the specific parameter by using the parameter association information.

4. The microscope system according to claim 3,
wherein the information shown in the macro image is a character string indicating the type of the image pickup target specimen, and
the selection unit is configured to identify the type of the image pickup target specimen by performing character recognition of the character string.

5. The microscope system according to claim 3,
wherein the information shown in the macro image is a code indicating the type of the image pickup target specimen, and
the selection unit is configured to identify the type of the image pickup target specimen by reading the code.

6. The microscope system according to claim 3,
wherein the information shown in the macro image is a code indicating identification information of the image pickup target specimen, and
the selection unit is configured to identify the identification information of the image pickup target specimen by reading the code, and identify the type of the image pickup target specimen corresponding to the identification information of the image pickup target specimen by using type association information that associates identification information of each of the plurality of types of specimens with each of the plurality of types.

7. The microscope system according to claim 1, further comprising:
a storage unit configured to store parameter association information that associates each of the plurality of types with each of the plurality of parameters;
a selection unit configured to select the specific parameter according to the type of the image pickup target specimen from among the plurality of parameters, and output the specific parameter to the control unit; and
a reader device configured to acquire information to identify the type of the image pickup target specimen,
wherein the selection unit is configured to identify the type of the image pickup target specimen from the information read by the reader device, and select a parameter corresponding to the type of the image pickup target specimen as the specific parameter by using the parameter association information.

8. The microscope system according to claim 7,
wherein the information read by the reader device is a character string indicating the type of the image pickup target specimen, and
the selection unit is configured to identify the type of the image pickup target specimen by performing character recognition of the character string.

9. The microscope system according to claim 7,
wherein the information read by the reader device is a code indicating the type of the image pickup target specimen, and
the selection unit is configured to identify the type of the image pickup target specimen by reading the code.

10. The microscope system according to claim 7,
wherein the information read by the reader device is a code indicating identification information of the image pickup target specimen, and
the selection unit is configured to identify the identification information of the image pickup target specimen by reading the code, and identify the type of the image pickup target specimen corresponding to the identification information of the image pickup target specimen by using type association information that associates identification information of each of the plurality of types of specimens with each of the plurality of types.

11. The microscope system according to claim 1, further comprising:
a specimen storage unit having a plurality of housing units;
a transport unit configured to transport the image pickup target specimen from the specimen storage unit to the stage;
a storage unit configured to store parameter association information that associates each of the plurality of housing units with each of the plurality of parameters; and
a selection unit configured to select the specific parameter according to the type of the image pickup target specimen from among the plurality of parameters, and output the specific parameter to the control unit,
wherein the control unit is configured to control the transport unit to transport the image pickup target specimen to the stage from a specific housing unit that houses the image pickup target specimen among the plurality of housing units, and
the selection unit is configured to select a parameter corresponding to the specific housing unit as the specific parameter by using the parameter association information.

12. The microscope system according to claim 1, further comprising:
a storage unit configured to store the plurality of parameters;
a selection unit configured to select the specific parameter according to the type of the image pickup target specimen from among the plurality of parameters, and output the specific parameter to the control unit; and
an image pickup apparatus configured to acquire a macro image of the image pickup target specimen,
wherein the specific parameter includes an image pickup range of an image of the image pickup target specimen on the stage, and
the selection unit is configured to correct the image pickup range on a basis of a range of the image pickup target specimen shown in the macro image.

13. The microscope system according to any one of claims 1 to 12,
wherein each of the plurality of types of specimens is a liquid-based cytology specimen, and
the plurality of types represent a plurality of preparation methods of the liquid-based cytology specimen.

14. The microscope system according to any one of claims 1 to 12,
wherein when the image pickup target specimen is a predetermined type of specimen other than the plurality of types, the control unit is configured to acquire, from the plurality of parameters and a predetermined parameter that is used for picking up an image of the predetermined type of specimen, the predetermined parameter selected according to the type of the image pickup target specimen, and control the stage, the two-dimensional image pickup device, and the focusing device on a basis of the predetermined parameter to acquire the image of the image pickup target specimen at each of the plurality of positions.

15. The microscope system according to claim 14,
wherein each of the plurality of types of specimens is a liquid-based cytology specimen,
the predetermined type of specimen is a tissue specimen, and
the plurality of types represent a plurality of preparation methods of the liquid-based cytology specimen.

16. A control device comprising:
a storage unit configured to store a plurality of parameters, each of which is used for picking up an image of each of a plurality of types of specimens in a microscope device; and
a selection unit configured to select a specific parameter that is used for picking up an image of an image pickup target specimen on a stage according to a type of the image pickup target specimen from among the plurality of parameters, and output the specific parameter to the microscope device,
wherein the microscope device is configured to control the stage, a two-dimensional image pickup device configured to pick up the image of the image pickup target specimen, and a focusing device configured to change a distance between an objective lens and the stage on a basis of the specific parameter to acquire an image of the image pickup target specimen in each of a plurality of planes at different heights from the stage at each of a plurality of positions in a plane parallel to the stage, and
each of the plurality of parameters includes a parameter that is used for image pickup for acquiring an image of each of the plurality of types of specimens in each of the plurality of planes at each of the plurality of positions.

17. A control method comprising:
acquiring a specific parameter that is used for picking up an image of an image pickup target specimen on a stage and selected according to a type of the image pickup target specimen from among a plurality of parameters, each of which is used for picking up an image of each of a plurality of types of specimens in a microscope device; and
controlling the stage, a two-dimensional image pickup device configured to pick up the image of the image pickup target specimen, and a focusing device configured to change a distance between an objective lens and the stage on a basis of the specific parameter to acquire an image of the image pickup target specimen in each of a plurality of planes at different heights from the stage at each of a plurality of positions in a plane parallel to the stage,
wherein each of the plurality of parameters includes a parameter that is used for image pickup for acquiring an image of each of the plurality of types of specimens in each of the plurality of planes at each of the plurality of positions.
